# EUROPÄISCHE PATENTSCHRIFT

(11) **EP 2 530 604 B1**
(45) Veröffentlichungstag und Bekanntmachung des Hinweises auf die Patenterteilung: **18.09.2013**
(21) Anmeldenummer: 11168269.6
(22) Anmeldetag: 31.05.2011
(51) Int. Cl.: G06F 17/22, G06F 17/27

(54) **Computerimplementiertes Verfahren sowie Vorrichtung zur Erstellung eines Strukturbaums**
Computer-implemented method and device for producing a structure tree
Procédé pouvant être implémenté sur ordinateur et dispositif de montage d'une arborescence

(43) Veröffentlichungstag der Anmeldung: 05.12.2012
(73) Patentinhaber: ESG Elektroniksystem- und Logistik-GmbH, 82256 Fürstenfeldbruck (DE)
(72) Erfinder: Will, Matthias, 85457 Wörth (DE)
(74) Vertreter: Betten & Resch

(56) Entgegenhaltungen:
- US-A1- 2005 256 887
- US-B1- 6 836 890
- Mathew Mcgreevey: "Message Text Formats - MTF", , 1. Januar 2008 (2008-01-01), Seiten 1-46, XP55010088, AU Gefunden im Internet: URL:http://www.milcis.com.au/milcis2008pdf /Wed/Mathew McGreevey.pdf [gefunden am 2011-10-20]
- M Cokus ET AL: "XML-Native Constraint Evaluation", , 6. Dezember 2004 (2004-12-06), Seiten 1-25, XP55010079, Hampton, VA, US Gefunden im Internet: URL:http://www.dtic.mil/cgi-bin/GetTRDoc?L ocation=U2&doc=GetTRDoc.pdf&AD=ADA460336 [gefunden am 2011-10-20]

## Beschreibung

### GEBIET DER ERFINDUNG

Die Erfindung betrifft ein computerimplementiertes Verfahren zur Erstellung eines Strukturbaums.

### HINTERGRUND DER ERFINDUNG

Oft wird zur Verbesserung bzw. zur Gewährleistung der interoperabilität zwischen Systemen ein Datenformat festgelegt, nach dem Nachrichten verfasst werden sollen.

Ein Beispiel für ein solches Nachrichtenformat ist das von der der NATO verwendete MTF (Message Text Formatting)-System.

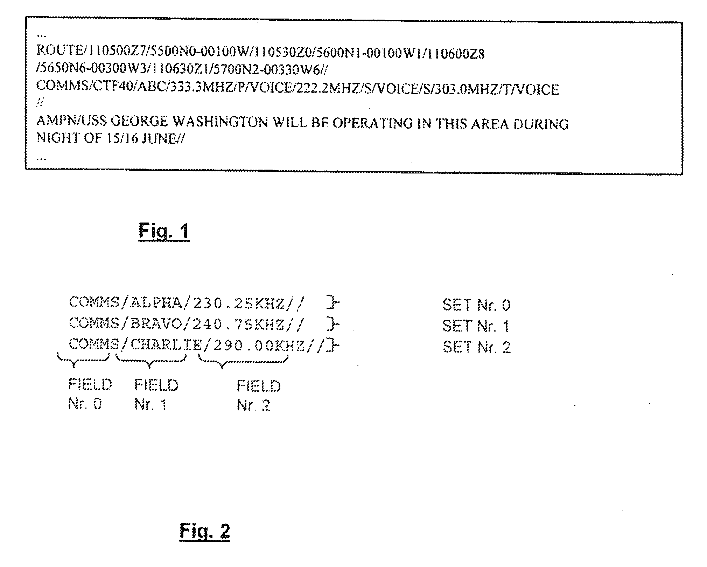

Um die Interoperabilität innerhalb der NATO zu verbessern, hat die NATO zur Standardisierung des Informationsaustauschs zwischen Einheiten und Systemen das NATO dieses MESSAGE TEXT FORMATTING SYSTEM (ADatP-3) eingeführt (kurz MTF-System). Das MTF-System definiert ein Textformat, das sowohl maschinenlesbar als auch menschenlesbar ist und eine bestimmte Struktur für Nachrichten definiert. Die Struktur der MTF-Meldungen wird durch den NATO MESSAGE CATALOUGE (Kürzel: APP-11) festgelegt. Dieser definiert mehrere hundert formatierte Meldungstypen. Diese besitzen eine Message-ID und eine vorgegebene Struktur. Ein Beispiel für eine solche MTF-Meldung ist in Fig. 1 dargestellt.

Die Struktur folgt dabei einem Schema, bei dem aus Elementen (sogenannten Sets) Segmente gebildet werden, aus denen dann wiederum die Nachricht gebildet wird. Die Sets wiederum sind zusammengesetzt aus einzelnen Feldern, sogenannten "Fields". Dies ist in Fig. 2 schematisch illustriert.

Die Zusammensetzung einer MTF-Nachricht folgt dabei einer bestimmten Syntax, die beispielsweise Trennzeichen und Maskierungszeichen sowie weitere Anforderungen an die Struktur vorgibt.

So definiert z. B. in einer MTF-Nachricht ein Slash "/" das Ende eines Fields, ein Doppel-Slash "//" das Ende eines Sets. Mehrere Fields zusammen ergeben ein Set, aus mehreren inhaltlich zusammengehörenden Sets wird wiederum ein Segment gebildet. Die Nachricht kann dann wiederum aus mehreren Segmenten bestehen, und die Struktur der Nachricht kann verschachtelt sein, so dass mehrere Segmente ineinander verschachtelt sein können.

Allerdings sind für eine formatkonforme MTF-Nachricht noch zahlreiche weitere Anforderungen hinsichtlich Struktur und Semantik vorgegeben. Diese beruhen beispielsweise auf der Verwendung vorgeschriebener Fields für bestimmte zu übermittelnde Informationen, auf die Art wie Fields und Sets (inhaltlich) aufgebaut sind und kombiniert werden können, um Segmenten zu bilden.

Vorhandene SW-Programme nutzen diese vorgegebenen Strukturinformationen, dazu um eine Baumstruktur der Meldung aufzubauen, die dem Nutzer z.B. ein schnelles und einfaches Navigieren innerhalb der Meldung ― ähnlich einem Inhaltsverzeichnis ― ermöglicht. Allerdings benötigen existierende SW-Programme für die Erstellung der Baumstruktur eine genaue Format-Spezifikation des zu verarbeitenden Nachrichten-Typs. Diese Format-Spezifikation entspricht im Prinzip einer Grammatik die mit Hilfe eines endlichen Automats geparst wird. Konkret bedeutet dies, dass die Format-Spezifikation eines Nachrichten-Typs genau vorgibt, welches SET zu welchem SEGMENT gehört und wie diese zu schachteln sind. Damit ist ein solches Programm jedoch sehr unflexibel gegenüber formatinkonformen Nachrichten, die nicht der genauen Spezifikation der Struktur entsprechen.

In der Praxis entsprechen jedoch viele der zwischen den Einheiten ausgetauschten Meldungen nicht der vorgegebenen Struktur. Die Gründe hierfür sind vielfältig. Meistens stehen dem Ersteller keine SW-Programme für die Erstellung einer formatkonformen Meldung zur Verfügung, so dass die Meldung von Hand erstellt werden muss. In einem solchen Fall wird oft vom Ersteller das Format nicht korrekt eingehalten.

Nicht unterstützte Nachrichten-Typen dieser Art können von bestehenden SW-Programmen jedoch nicht verarbeitet werden, da der Verarbeitungsalgorithmus auf einer entsprechende Format-Spezifikation basiert.

Ein weiteres Problem ist die Vielzahl der definierten Meldungstypen inkl. verschiedener Baselines. Vorhandene SW-Programme unterstützen daher nur eine eingeschränkte Anzahl an Message-Typen.

Vorhandene Systeme zur Erstellung einer Baumstruktur aus MTF-Nachrichten sind daher nicht fehlertolerant und wenig flexibel.

Es ist daher eine Aufgabe der vorliegenden Erfindung, ein System zur automatischen Erstellung einer Baumstruktur, bereitzustellen, das in flexiblerer Weise aus formatinkonformen Nachrichten dennoch einen Strukturbaum erstellen kann.

### ZUSAMMENFASSUNG DER ERFINDUNG

Die Erfindung wird nachfolgend anhand von Ausführungsbeispielen unter Bezugnahme auf die Zeichnungen beschrieben.

Gemäß einem Ausführungsbeispiel wird ein computerimplementiertes Verfahren bereitgestellt zur Erstellung eines Strukturbaums aus einer Nachricht, die zusammengesetzt ist aus einer Mehrzahl von Sets, wobei ein Set aus einem oder mehreren Feldern besteht, wobei die Felder jeweils inhaltlich nicht vorgegebene Textelemente enthalten, wobei die Grundstruktur der Nachricht definiert ist dadurch, dass ein Feld-Ende durch ein erstes vorgegebenes Trennzeichnen identifiziert wird, und dass ferner ein Set-Ende durch ein zweites vorgegebenes und vom ersten Trennzeichen verschiedenes Trennzeichnen identifiziert wird, wobei das Verfahren aufweist:
i) Zerlegung der Nachricht in Felder und Sets anhand der ersten und zweiten Trennzeichen innerhalb der Nachricht, um die einzelnen Felder und Sets der Nachricht zu erkennen;
ii) Bilden von Segmenten, um inhaltlich zusammengehörende Sets zu identifizieren und einem Segment zusammenzufassen, durch:
   iia) Suche nach dem ersten sich wiederholenden Set der Set-Tiefe n, das die gleiche Set-ID aufweist wie ein vorangegangenes Set, wobei ein Set als sich wiederholendes Set angesehen wird, wenn es die gleiche Set-ID aufweist wie ein vorheriges Set und, wobei die Set-ID der Set-ID-Tiefe n eines Sets der Inhalt des ersten oder der ersten n Fields des Sets ist;
   iib) nach Auffinden eines sich wiederholenden Sets, Durchsuchen der Nachricht nach weiteren Sets mit derselben Set-ID;
   iic) Segmentierung der Nachricht in Segmente, wobei ein Segment gebildet wird durch das sich wiederholende Set mit der bestimmten Set-ID als Eröffnungs-Set und die ihm bis zum nächsten sich wiederholenden Set folgenden Sets als Unter-Sets,
   iid) wiederholtes Anwenden der Schritte a) bis c) auf die noch nicht segmentierten Untersets der gebildeten Segmente, jeweils zur Bildung von Untersegmenten in einer nächst niedrigen Segmenthierarchiestufe, um dadurch eine hierarchische Struktur aus verschachtelten Segmenten zu bilden;
iii) Erstellen eines Strukturbaums basierend auf den gebildeten Segmenten, wobei die Erstellung des Strukturbaums aufweist:
   iiia) Zuweisen eines Knotens einer ersten Baumstruktur-Hierarchieebene zu jedem sich wiederholenden Set mit gleicher Set-ID einer bestimmten Segmenthierarchieebene;
   iiib) Gruppieren der in Schritt iiia) zugewiesenen Knoten der Baumstruktur unter einen gemeinsamen übergeordneten Knoten der nächst höheren Baumstruktur-Hierarchieebene;
   iiic) Zuweisen von Unterknoten der nächst niedrigeren Baumstruktur-Hierarchieebene zu den Eröffnungssets Segmente der nächst niedrigeren Segmenthierarchieebene;
   iiid) Gruppieren der in Schritt iiic) zugewiesenen Knoten der Baumstruktur unter einen gemeinsamen übergeordneten Knoten der nächst höheren Baumstruktur-Hierarchieebene;
   iiie) wiederholtes Anwenden der Schritte iiic) bis iiid) bis alle Sets der hierarchischen Struktur aus verschachtelten Segmenten einem Baumknoten zugewiesen sind.

Durch Segmentierung sowie Zuweisung der Segmente zu einem Strukturbaum und Gruppierung kann ein den semantischen Zusammenhang der Nachricht repräsentierender Strukturbaum erstellt werden, ohne die genauen semantischen Regeln für die Erstellung einer formatkonformen Nachricht zu kennen und ohne dass die Nachricht diesen Regeln genau entspricht.

Gemäß einem Ausführungsbeispiel werden in Schritt iia) sowie dem entsprechenden für die niedrigeren Hierarchieebenen ausgeführten Schritt beim letzten sich nicht mehr wiederholenden Set die darauf folgenden Sets als zu diesem Segment gehörende Untersets angesehen, sofern sie bereits vorher in einem durch das Set mit der bestimmten Set-ID eröffneten Segment als Unterset aufgetaucht sind, und zwar bis zu einem Set, das noch nicht als Unterset aufgetaucht ist;

Dies ermöglicht die Behandlung und Einordnung von denjenigen Sets, die auf das letzte sich wiederholende Set einer Segmentierungs-Hierarchieebene folgen. Die unmittelbar nachfolgenden Sets werden als Untersets behandelt, sofern und soweit sie bereits einmal vorher als Unterset aufgetaucht sind.

Gemäß einem Ausführungsbeispiel umfasst das Verfahren:
Erhöhen der Set-ID-Tiefe um eins und
Erneutes Ausführen der Schritte zum Bilden von Segmenten und zum Erstellen eines Strukturbaums basierend auf der um eins erhöhten SET-ID-Tiefe.

Dies ermöglicht die Behandlung von Fällen, in denen eine Segmentierung zunächst nicht möglich war, da zwischen sich wiederholenden Sets keine Zwischen-Sets gefunden wurden.

Gemäß einem Ausführungsbeispiel umfasst das Verfahren:
Das wiederholte Ausführen der Erhöhen der SET-ID-Tiefe um eins und das erneute Bilden von Segmenten und Erstellen eines Strukturbaums basierend auf der um eins erhöhten SET-ID-Tiefe.

Dies ermöglicht die Maskierung von mehreren vorangestellten Feldern.

Gemäß einem Ausführungsbeispiel umfasst das Verfahren:
Anzeigen der Nachricht in der erzeugten Baumstruktur und Ermöglichen der Navigation durch die Meldung anhand der Baumstruktur.

Dies ermöglicht die Verwendung des Strukturbaums für eine verbesserte und einfachere sowie übersichtlichere Navigation durch die Nachricht.

Gemäß einem Ausführungsbeispiel umfasst das Verfahren:
Verwenden des erzeugten Strukturbaums für die Suche nach Bestimmten Inhalten der Nachricht, aufweisend:
Ermöglichung der Eingabe von mehr als einem Suchkriterium, das in dem oder den zu suchenden Teil der Nachricht enthalten sein soll;
Suche nach Segmenten, deren Inhalt das mehr als eine Suchkriterium erfüllt;
Ausgabe der Knoten, die den Eröffnungssets der Segmente zugeordnet sind, die das Suchkriterium erfüllen, als Antwort auf die Suche.

Auf diese Weise kann Set-übergreifend nach Inhalten der Nachricht gesucht werden.

Gemäß einem Ausführungsbeispiel wird eine Vorrichtung bereitgestellt zur Erstellung eines Strukturbaums aus einer Nachricht, die zusammengesetzt ist aus einer Mehrzahl von Sets, wobei ein Set aus einem oder mehreren Feldern besteht, wobei die Felder jeweils inhaltlich nicht vorgegebene Textelementen enthalten, wobei die Grundstruktur der Nachricht definiert ist dadurch, dass ein Feld-Ende durch ein erstes vorgegebenes Trennzeichnen identifiziert wird, und dass ferner ein Set-Ende durch ein zweites vorgegebenes und vom ersten Trennzeichen verschiedenes Trennzeichnen identifiziert wird, wobei die Vorrichtung aufweist:
i) ein Modul zur Zerlegung der Nachricht in Felder und Sets anhand der ersten und zweiten Trennzeichen innerhalb der Nachricht, um die einzelnen Felder und Sets der Nachricht zu erkennen;
ii) ein Modul zum Bilden von Segmenten, um inhaltlich zusammengehörende Sets zu identifizieren und einem Segment zusammenzufassen, durch:
   iia) ein Modul zur Suche nach dem ersten sich wiederholenden Set der Set-Tiefe n, das die gleiche Set-ID aufweist wie ein vorangegangenes Set, wobei ein Set als sich wiederholendes Set angesehen wird, wenn es die gleiche Set-ID aufweist wie ein vorheriges Set und, wobei die Set-ID der Set-ID-Tiefe n eines Sets der Inhalt des ersten oder der ersten n Fields des Sets ist;
   iib) ein Modul zum, nach Auffinden eines sich wiederholenden Sets, Durchsuchen der Nachricht nach weiteren Sets mit derselben Set-ID;
   iic) ein Modul zur Segmentierung der Nachricht in Segmente, wobei ein Segment gebildet wird durch das sich wiederholende Set mit der bestimmten Set-ID als Eröffnungs-Set und die ihm bis zum nächsten sich wiederholenden Set folgenden Sets als Unter-Sets,
   iid) ein Modul zum wiederholten Anwenden der Schritte a) bis c) auf die noch nicht segmentierten Untersets der gebildeten Segmente, jeweils zur Bildung von Untersegmenten in einer nächst niedrigen Segmenthierarchiestufe, um dadurch eine hierarchische Struktur aus verschachtelten Segmenten zu bilden;
iii) ein Modul zum Erstellen eines Strukturbaums basierend auf den gebildeten Segmenten, wobei die Erstellung des Strukturbaums aufweist:
   iiia) Zuweisen eines Knotens einer ersten Baumstruktur-Hierarchieebene zu jedem sich wiederholenden Set mit gleicher Set-ID einer bestimmten Segmenthierarchieebene;
   iiib) Gruppieren der in Schritt iiia) zugewiesenen Knoten der Baumstruktur unter einen gemeinsamen übergeordneten Knoten der nächst höheren Baumstruktur-Hierarchieebene;
   iiic) Zuweisen von Unterknoten der nächst niedrigeren Baumstruktur-Hierarchieebene zu den Eröffnungssets Segmente der nächst niedrigeren Segmenthierarchieebene;
   iiid) Gruppieren der in Schritt iiic) zugewiesenen Knoten der Baumstruktur unter einen gemeinsamen übergeordneten Knoten der nächst höheren Baumstruktur-Hierarchieebene;
   iiie) wiederholtes Anwenden der Schritte iiic) bis iiid) bis alle Sets der hierarchischen Struktur aus verschachtelten Segmenten einem Baumknoten zugewiesen sind.

Die Vorrichtung umfasst gemäß einem Ausführungsbeispiel auch ein oder mehrere Module zur Durchführung der Schritte gemäß weiteren Ausführungsbeispielen.

Gemäß einem Ausführungsbeispiel wird ein Computerprogramm bereitgestellt, aufweisend:
Computerprogrammcode, der, wenn er von einem Computer ausgeführt wird, diesen in die Lage versetzt, ein Verfahren gemäß einem der Ausführungsbeispiele auszuführen.

### BESCHREIBUNG DER ZEICHNUNGEN

Fig. 1 illustriert schematisch einen Teil einer Nachricht, auf die der Struktur-Parser angewendet werden kann.
Fig. 2 zeigt die Struktur einer Nachricht eines Ausführungsbeispiels.

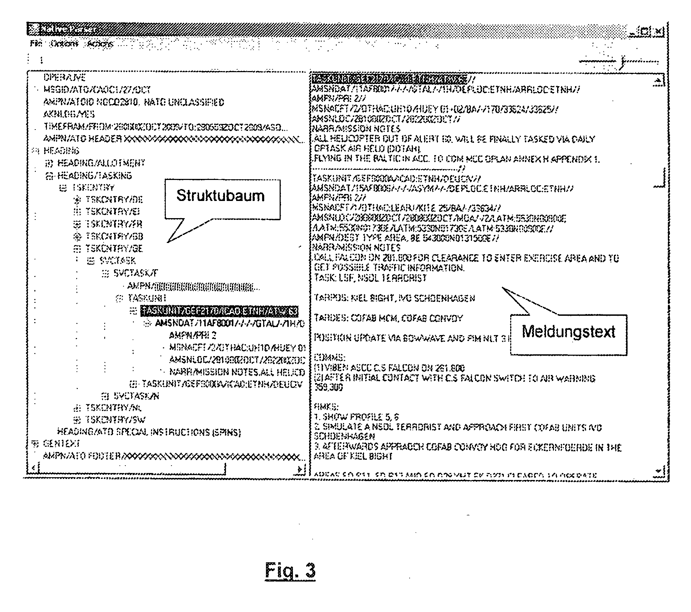

Fig. 3 zeigt ein Beispiel einer Nachricht sowie eines daraus erstellten Strukturbaums.
Fig. 4 zeigt ein weiteres Beispiel einer Nachricht sowie eines daraus erstellten Strukturbaums.
Fig. 5 zeigt ein weiteres Beispiel einer Nachricht sowie eines daraus erstellten Strukturbaums.
Fig. 6 und 7 zeigen Beispiele für Gruppierungen.
Fig. 8 zeigt den Pseudocode eines Strukturparsers gemäß einem Ausführungsbeispiel der Erfindung.
Fig. 9 zeigt ein weiteres Beispiel einer Nachricht sowie eines daraus erstellten Strukturbaums.

### DETAILLIERTE BESCHREIBUNG

Gemäß einem Ausführungsbeispiel wird ein Systeme zur Erstellung einer Baumstruktur bereitgestellt, das in der Lage ist, eine Nachricht, die aus Fields, Sets und Segmenten besteht, deren Inhalt jeweils nicht vorgegeben ist und wobei die Segmente ineinander verschachtelt sein können, eine (inhaltlich) sinnvolle Baumstruktur der Nachricht zu erstellen, die dem Benutzer ermöglicht, den Inhalt der Nachricht schneller zu überblicken.

Durch die Ausführungsbeispiele wird die Erstellung einer Baustruktur und damit die Erkennung (semantischer) Hierarchien ermöglicht, ohne eine semantisch-inhaltliche Verarbeitung der Nachricht durchzuführen. Lediglich anhand einer rudimentären Grundstruktur, die die Trennung der Nachricht in die Einzelkomponenten Fields (Felder), Sets (Sätze) und Segmente vorgibt, kann mit dem vorgeschlagenen Ansatz eine (semantisch) sinnvolle Erstellung einer Baumstruktur erreicht werden.

Dieser Ansatz lässt sich auf Nachrichten anwenden, die lediglich einer (rudimentären) Grundstruktur folgen, die vorgibt, wie die einzelnen Elemente der Nachricht voneinander getrennt sind, wobei es drei Hierarchieebenen (Fields, Sets und Segmente) gibt, die ineinander verschachtelt sein können.

Der vorgeschlagene Ansatz erkennt die Struktur einer Meldung/Nachricht nur anhand des Meldungstextes und erstellt basierend den zugehörigen Strukturbaum. Dazu benötigt der Algorithmus keine Informationen über den Meldungstyp oder die (über die Trennung der Nachrichtenelemente hinausgehende) vorgegebene Struktur. Vielmehr ist ein SW-Programm(nachfolgend bezeichnet als "Struktur-Parser") mit dem gemäß einem Ausführungsbeispiel der Erfindung in der Lage alle formatierten und strukturierten Meldungen zu verarbeiten, auch wenn der Meldungstyp unbekannt ist oder die Meldung nicht der vorgegebenen Struktur, die über die Definition der Trennzeichen der Nachrichtenelemente hinausgeht, entspricht.

Der Struktur-Parser ist ein Algorithmus zur Verarbeitung von formatierten und strukturierten Meldungen, die hierarchisch aus den Elementen Fields (Felder), Sets und Segments aufgebaut ist, wobei ein Field-Ende durch ein Slash und ein Set-Ende durch ein Doppel-Slash definiert ist. Segmente wiederum bestehen aus mehreren inhaltlich zusammengehörenden Sets.

Derart aufgebaute Nachrichten sind z. B. Nachrichten gem. dem NATO Message Text Formatting System (ADatP-3 und APP-11 Message-Katalog). Diese erfüllen aber, sofern sie formatkonform aufgebaut sind, über die Definition der Elemente durch Trennzeichen hinaus noch eine große weitere Zahl von Formatkonventionen. Der Struktur-Parser ist gemäß einem Ausführungsbeispiel so ausgelegt, dass er sowohl konforme als auch nicht-konforme Meldungen, verarbeiten kann.

Nachfolgend werden Ausführungsbeispiele des Struktur-Parsers unter beispielhafter Bezugnahme auf das AdatP-3-Format erläutert, für die er sich besonders eignet. Generell kann der Ansatz jedoch auf weitgehend unstrukturierte Nachrichten anderer Fromate angewendet werden, sofern sie aus Fields und Sets aufgebaut sind, die durch Trennzeichen erkennbar sind und mehrere inhaltlich zusammengehörende Sets ein Segment bilden.

Der Struktur-Parser besteht dabei gemäß einem Ausführungsbeispiel aus den folgenden Regeln und deren rekursiver Anwendung:
- Segmentierungs-Regel
- Gruppierungs-Regel

Vor der Anwendung der Regeln wird zunächst der Meldungstext eingelesen und die SETs und FIELDs erkannt. Die Zerlegung des Meldungstextes in SETs und FIELDs erfolgt anhand der Trennzeichen Slash "/" für das FIELD-Ende und Doppel-Slash "//" für das SET-Ende.

Nachdem die Meldung in SETs und FIELDs zerlegt wurde, erfolgt die Anwendung der Regeln. Die Regeln werden im Folgenden zunächst separat beschrieben.

Zunächst zur Segmentierungsregel.

Gemäß ADatP-3 ist ein Segment wie folgt definiert: Ein Segment ist eine vordefinierte Sequenz von zwei oder mehreren nacheinander angeordneten SETs, die inhaltlich zusammengehören. Ein Segment kann als Gruppe wiederholt werden. Ein Segment kann wiederum Segmente enthalten. (Es heisst beispielsweise in der (englischen) Spezifikation: A segment is a predefined sequence of two or more sequential sets, related by their content, that may be repeated as a group.)

Mit der Segmentierungs-Regel sollen Segmente in der Meldung erkannt und im Baum zu einem Knoten zusammengefasst werden. Um die Segmente zu erkennen wird deren Wiederholbarkeit bzw. die Wiederholbarkeit des ein Segment eröffnenden Sets in der Meldung ausgenutzt. Wird ein Segment bzw. ein das Segment eröffnendes SET in einer Meldung mit gleicher SET-ID wiederholt, so wird dies vom Struktur-Parser erkannt. Um die Wiederholung von SETs zu erkennen, wird nach sich wiederholenden SETs gesucht, die das entsprechende Segment eröffnen. Sich wiederholende SETs werden anhand der gleichen SET-ID erkannt. Die SET-ID ist in der Regel das erste FIELD eines SETs (SET-ID-Tiefe gleich eins). Abhängig von der SET-ID-Tiefe kann die Segmentierungs-Regel auch das N-te FIELD oder die ersten N Fields als SET-ID verwenden.

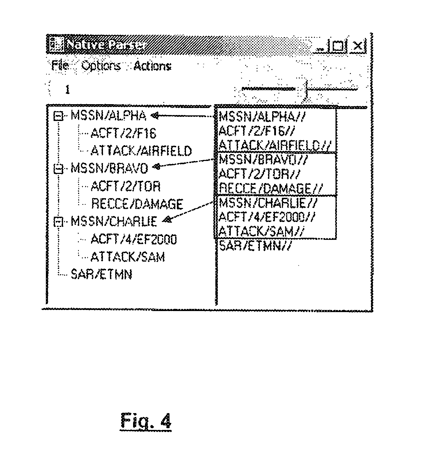

Im in Fig. 4 gezeigten Beispiel wird die Wiederholung der SETs mit der SET-ID "MSSN" erkannt.

Hierzu wird die Nachricht nach einem Set mit einer SET-ID durchsucht, die wiederholt auftritt, im Beispiel von Fig. 4 sind das die SETs mit der SET-ID MSSN. Unter einem "wiederholt auftretenden SET" ist dabei nicht ein identisch erneut auftretendes SET zu verstehen, sondern vielmehr ein SET, dessen SET-ID erneut auftritt. Wie aus Fig. 4 erkennbar sind die MSSN-SETs selbst unterschiedlich, sie weisen lediglich die gleiche SET-ID auf.

Die SETs zwischen zwei sich wiederholenden SETs mit gleicher SET-ID werden einem Segment zugeordnet und erscheinen als Unterelemente (Sub-SETs) des Segment-SETs in der Baumstruktur. Die mit wiederholt gleicher SET-ID auftretenden SETS werden also als SETs betrachtet, die ein Segment eröffnen. Ihnen folgen dann die zu dem Segment gehörenden Unterset, wobei dies all diejenigen SETS sind, die folgen bis erneut ein sich wiederholendes SET mit gleicher SET-ID auftritt.

Beim letzten Segment einer Wiederholung besteht die Schwierigkeit die zugehörigen untergeordneten Sub-SETs zu erkennen, da- nach dem letzten ein Segment eröffnenden Segment-SET keine Wiederholung des SETs mehr erfolgt, welches die untergeordneten Sub-SETs eingrenzt.

Um die zum letzen Segment zugehörigen Sub-SETs zu erkennen, merkt sich gemäß eine Ausführungsbeispiel der Algorithmus die SET-IDs der untergeordneten Sub-SETs der vorherigen Segmente der Gruppe, beispielsweise durch Erstellen einer "Segment-Map" basierend auf den Sätzen und Fields, die in der Nachricht vorhanden sind.

Dem letzten sich wiederholenden Segment mit gleicher Set-ID werden dann die folgenden SETs anhand der Segment-Map als untergeordnete Sub-SETs zugeordnet. Im Beispiel gemäß Fg. 4 werden die SETs "ACFT", "ATTACK" und "RECCE" als untergeordnete Sub-SETs des Segment-SETs "MSSN" erkannt und in der Segment-Map gespeichert. Für das letzte Segment-SET der Wiederholung ("MSSN/CHARLIE//") werden daher die folgenden SETs "ACFT/4/EF2000//" und "ATTACK/SAM//" als untergeordnete Sub-SETs erkannt und zugeordnet. Das SET "SAR/ETMN//" hingegen ist nicht als untergeordnetes Sub-SET bekannt, und wird daher nicht dem Segment "MSSN" zugeordnet.

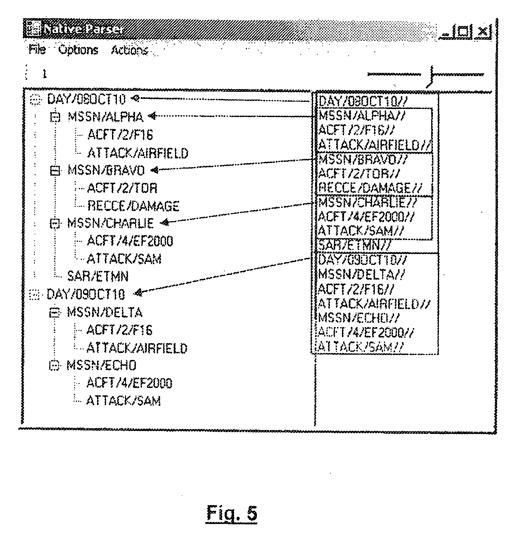

Die Segmentierungs-Regel wird nacheinander auf die noch nicht segmentierten SETs der Meldung angewandt. Darüber hinaus wird die Segmentierungs-Regel rekursiv für die einem Segment untergeordneten SETs angewandt, um mehrfach geschachtelte Segmente zu erkennen. Ein Beispiel für eine solch verschachtelte Struktur ist in Fig. 5 gezeigt.

Die Segmentierungsregel sucht also zunächst nach dem (ersten) SET in der Nachricht, das mit gleicher SET-ID erneut auftritt. Dieses bildet dann die Grundlage für die Segmentierung auf der obersten Hierarchieebene. Die SETs zwischen dem ersten und dem zweiten Auftreten der SETs mit dieser gleichen SET-ID bilden dann das erste Segment, die Nachricht wird dann weiter durchsucht nach weiteren SETS mit gleicher SET-ID, die folgen und weitere Segmente eröffnen.

Die oberste Segmentierungsheirarchieebene wird also durch ein bestimmtes SET definiert, und zwar das erste SET der Nachricht, das mit gleicher SET-ID erneut auftritt, wobei allerdings zwischen dem ersten und dem erneuten Auftreten weitere SETs mit anderer SET-ID liegen sollten, da sonst eine Segmentierung (ohne "Zwischen-SETs) keinen Sinn macht.

Im Beispiel von Fig. 5 ist die erste sich in der Nachricht wiederholende SET-ID "Day", deshalb sind die hierarchisch obersten Segmente die "DAY"-Segmente.

Nach dem Bilden der ersten Segmentierungs-Hierarchieebene wird dann die Segmentierung für die nächst niedrigere Hierarchieebene erneut durchgeführt.

Hier wird erneut nach dem (ersten) Segment gesucht, dessen SET-ID sich wiederholt. Dieses (und seine Wiederholungen) eröffnen dann die Segmente der nächst niedrigeren Hierarchieebene.

In Fig. 5 ist dies die Segment-ID "MSSN". Dabei ist es allerdings Zufall, dass bei allen DAY-Segmenten die nächst niedrigeren Segmente MSSN-Segmente sind, dies könnte für verschiedene DAY-Segmente auch unterschiedlich sein.

Ist auf einer Hierarchie-Ebene eine Segmentierung erfolgt, so folgt dieser eine Gruppierung. Hierzu wird eine Gruppierungsregel ausgeführt, die nachfolgend beschrieben wird.

Die Gruppierungs-Regel dient dazu, (auf einer Hierarchieebene) aufeinanderfolgende gleichartige SETs unter einem Baumknoten gruppieren. Aufeinanderfolgende SETs werden dabei als gleichartig erkannt, wenn Sie die gleiche SET-ID (abhängig von der SET-ID-Tiefe das N-te FIELD) besitzen.

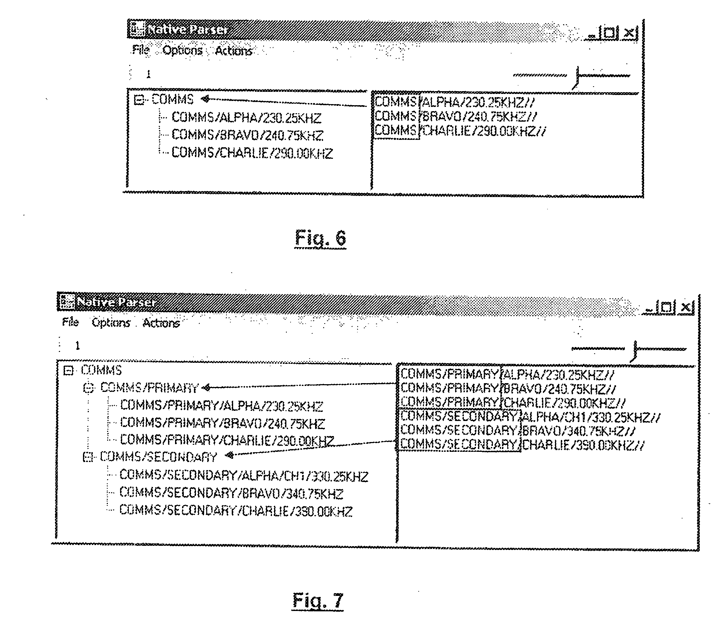

Ein Beispiel für eine Beispiel solche Gruppierung zeig Fig. 6. Dabei werden die SETs mit der SET-lD "COMMS" zu einem neuen Baumknoten gruppiert.

Im Beispiel aus Fig. 5 gibt es in der obersten Hierarchieebene zwei "DAY"-Sets, also SETs mit gleicher SET-ID. Diese wurden im Rahmen der Segmentierung erkannt und werden dann durch die Gruppierung entsprechend der in Fig. 6 gezeigten Weise unter einen gemeinsamen Baumknoten "DAY" gruppiert (nicht .in Fig. 5 gezeigt).

Bei der Segmentierung der nächst niedrigeren Hierarchieebene gibt es dann wieder eine Mehrzahl von SETs mit gleicher SET-ID, die "MSSN"-SETs. Auch diese werden dann jeweils durch die Gruppierungsregel unter einen gemeinsamen Knoten gruppiert, beispielsweise einen MSSN-Knoten.

Durch die Anwendung dieser Regeln (Segmentierungs- und Gruppierungsregeln), die rekursiv von oben nach unten auf immer tiefer liegenden (Baum)Hierarchieebenen ausgeführt werden, kann dann ein übersichtlicher Strukturbaum aus der - nahezu - strukturlosen Nachricht erstellt werden. Dabei reflektiert der Strukturbaum den semantischen Aufbau der Nachricht und erleichtert so das Navigieren.

Bisher wurde nur die Segmentierung und Gruppierung mit der Segment-ID-Tiefe eins erläutert, d.h. es wurde jeweils nur das erste Field der Sets betrachtet.

Gemäß weiteren Ausführungsbeispielen kann aber auch eine höhere SET-ID-Tiefe berücksichtigt werden.

So wird z. B. bei einem Ausführungsbeispiel die Gruppierungs-Regel wird rekursiv angewendet, wobei je nach SET-ID-Tiefe N des rekursiven Aufrufs das N-te FIELD für die Gruppierung betrachtet wird. Fig. 7 zeigt beispielsweise die rekursive Anwendung der Gruppierungs-Regel am Beispiel. Zunächst werden auf erster Ebene (SET-ID-Tiefe N = 1) die SETs mit dem ersten FIELD "COMMS" unter dem Baumknoten "COMMS" gruppiert. Danach werden die SETs unterhalb des Baumknotens "COMMS" auf zweiter Ebene (SET-ID-Tiefe N = 2) gruppiert. Dabei wird jeweils das zweite FIELD betrachtet. Im Beispiel werden die SETs mit dem zweiten FIELD "PRIMARY" und "SECONDARY" gruppiert und jeweils unterhalb des Baumknotens "COMMS" zu einem eigenen Knoten zusammengefasst.

Eine solche iterative bzw. rekursive hierarchische Anwendung der Gruppierungs-Regel ist insbesondere sinnvoll, wenn vom Ersteller der Nachricht den eigentlichen Sets der Nachricht zur besseren Strukturierung noch ein oder mehrere weitere Felder vorangestellt hat. Diese können dann quasi zu "zu einem Knotenzusammengefasst" werden und unterhalb dieses Knotens (oder dieser Knoten) kann dann die eigentliche Segmentierung beginnen.

Zum Aufbau der Baumstruktur einer Meldung mit Hilfe des Algorithmus Struktur-Parser werden die Segmentierungs- und Gruppierungs-Regel gemeinsam angewandt. Die Anwendung erfolgt rekursiv auf verschiedenen Ebenen. Nachfolgend wird ein Algorithmus beschrieben, der einen solchen Struktur-Parser implementiert.

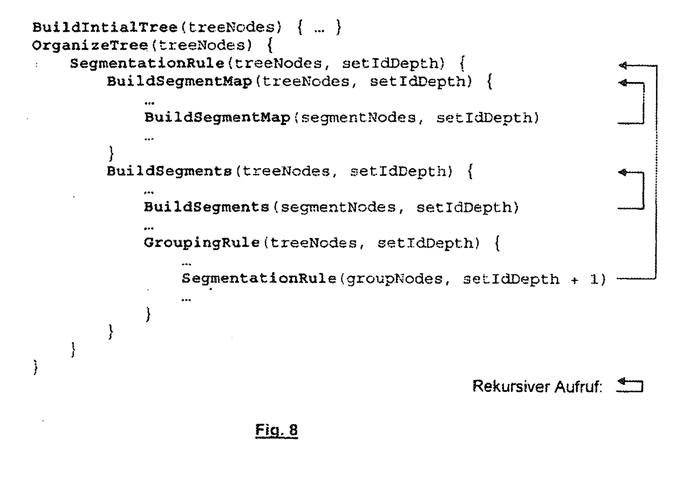

Der Pseudo-Code in Fig. 8 zeigt die Verschachtelung der rekursiven Aufrufe von Segmentierungs- und Gruppierungs-Regel. Zur besseren Erklärung sind die einzelnen Schritte/Zeilen durchnummeriert.

In Zeile 01 wird zunächst der initiale Baum aufgebaut. Dabei wird für jedes SET ein Knoten auf der obersten Ebene des Strukturbaums angelegt. In Zeile 02 erfolgt der Aufruf der Methode OrganizeTree(). OrganizeTree() wendet die Segmentierungs- und Gruppierungs-Regel auf alle Knoten des initialen Strukturbaums an (treeNodes) und erstellt damit Strukturbaum der Nachricht (z. B. der ADatP-3 Meldung).

Dazu wird in Zeile 03 die Funktion SegmentationRule() für den initialen Strukturbaum (treeNodes) und die SET-ID-Tiefe gleich Eins (setldDepth) aufgerufen. Gemäß Strukturierungsregel analysiert die Funktion zunächst die SETs und erstellt die Segment-Map (Aufruf von BuildSegmentMap() in Zeile 04). Die Analyse der SETs gemäß der Strukturierungsregel erfolgt rekursiv. Für ein erkanntes Segment werden die Sub-SETs dieses Segmentes auf weitere Segment analysiert. Dies erfolgt durch den rekursiven Aufruf von BuildSegmentMap() in Zeile 06.

Ergebnis des Methode BuildSegmentMap() ist die Information darüber, welche Segmente und Untersegmente die Nachricht aufweist, d.h. wo ein Segment beginnt, wo es endet und was seine Untersegmente sind. Anhand dieser Segment-Map kann dann der Strukturbaum erstellt werden.

Nach dem Aufbau der Segment-Map wird der Strukturbaum hierzu gemäß der erkannten Segmente strukturiert. Dies erfolgt in der Funktion BuildSegments() in Zeile 09. Der Aufbau der Segment-Knoten erfolgt analog zum Aufbau der Segment-Map wiederum rekursiv. Dazu wird für die Sub-Knoten eines erstellten Segments die Funktion BuildSegments() rekursiv aufgerufen (siehe Zeile 11).

Nachdem auf einer Ebene alle Segmente erstellt wurden erfolgt in Zeile 13 der Aufruf der Funktion GroupingRule(). Diese wendet die Gruppierungs-Regel auf alle Knoten des Strukturbaums der entsprechenden Ebene des Aufrufs von BuildSegments() (Zeile 09) an.

Bei einem, erneuten (rekursiven) Aufruf wird dann die Funktion BuildSegments() aufgerufen und führt dann die Zuweisung der Knoten für die nächst niedrigere Hierarchieebene des Strukturbaums durch.

Die Funktion GroupingRule() wendet die Gruppierungs-Regel dabei nur auf die Knoten der Ebene des Aufrufs von BuildSegments() an. Es erfolgt zunächst kein Abstieg in die Unter-Segmente oder -Gruppen des Strukturbaums. Die rekursive Anwendung der Gruppierungs-Regel für die untergeordneten Hierarchieebenen erfolgt innerhalb des rekursiven Aufrufes der Funktion BuildSegments() in Zeile 11. Da die Funktion GroupingRule() innerhalb der Funktion BuildSegments() aufgerufen wird, erfolgt die rekursive Anwendung der Gruppierungs-Regel durch den rekursiven Aufruf der Funktion BuildSegments() in Zeile 11.

Nachdem die Knoten einer Ebene gruppiert wurden (Zeile 14), erfolgt in Zeile 15 der Aufruf der Funktion SegmentationRule() mit einer um eins erhöhten SET-ID-Tiefe (setIdDepth + 1) für die entsprechenden Sub-Knoten einer Gruppe (groupNodes). Durch diesen Aufruf werden Segmentierungs- und Gruppierungs-Regel erneut angewandt, allerdings wird jeweils das nächste FIELD eines SETs als SET-ID betrachtet. Dadurch können die Regeln auch auf strukturierte Meldungen angewandt werden, wenn z.B. der Nutzer zur besseren Strukturierung der Meldung der jeweiligen SET-ID ein weiteres FIELD vorangestellt hat.

In diesem Fall wird dann im ersten Durchlauf bei der Segmentierung auf Set-ID-Tiefe Eins keine Segmente gefunden. Ein Beispiel für einen solchen Fall wäre, dass etwa im Beispiel auf Fig. 5 viele Tage (DAYs) existieren, und zur besseren Übersichtlichkeit der Ersteller der Nachricht jedem DAY-SET ein Set vorangestellt hat, das die Wochennummer bezeichnet, also z. B. W1, W2, etc. in Diesem Fall werden auf SET-ID-Tiefe Eins keine Segmente gefunden, denn es gibt zwar Wiederholungen von Sets mit gleicher SET-ID, aber keine dazwischen liegenden SETs mit anderer SET-ID, so dass keine Segmentierung möglich ist.

In diesem Fall werden dann die SETs mit SET~ID W1 unter einem Knoten W1 gruppiert, die SETs mit einer SET-ID W2 unter einem Knoten W2, etcetera. Erst bei der nächst höheren SET-ID-Tiefe ((nach Erhöhung der SET-ID-Tiefe in Zeile 15 von Fig. 8) werden dann die DAY-Segmente gefunden und die Funktionsaufrufe von BuildSegment führen zu der Zuordnung von Segmenten zu Knoten.

Auf die beschriebene Weise kann somit trotz Voranstellung von Fields, die eigentlich nicht zu der Nachricht gehören und vom Ersteller zwecks besserer Übersichtlichkeit eingefügt wurden, mittels einer "Quasi-Maskierung" dieser vorangestellten Fields die Erstellung des Strukturbaums unter Verwendung einer höheren SET-ID-Tiefe durchgeführt werden.

Ist dann der Strukturbaum durch Segmentierung aller Hierarchieebenen unter Verwendung der Segmentierungsregel und der Gruppierungsregel erstellt, so ist eine weitere Segmentierung und Gruppierung mit noch größerer SET-ID-Tiefe nicht nötig, der Algorithmus kann dann ohne weitere Erhöhung der SET-ID-Tiefe abgebrochen werden.

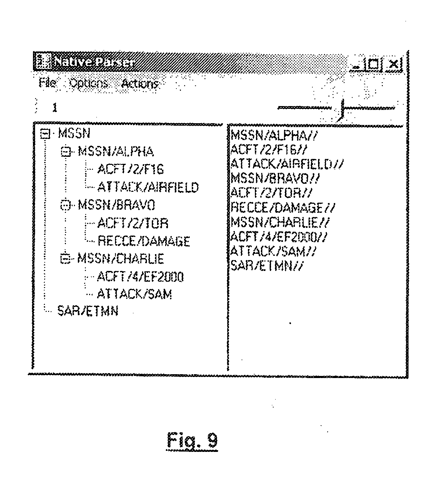

Fig. 9 zeigt nun ein Beispiel für die gemeinsame Anwendung der Regeln auf der ersten Ebene mit der SET-ID-Tiefe Null. Zunächst werden durch die Segmentierungs-Regel die "MSSN"-Segmente erkannt und strukturiert. Danach werden die drei "MSSN"-Segmente durch Anwendung der Gruppierungs-Regel unter den MSSN-Knoten gruppiert (roter Baum-Knoten).

Der mit Hilfe des Struktur-Parsers erstellte Strukturbaum kann zur weiteren Verarbeitung der Meldung innerhalb einer Anwendung benutzt werden. Dabei werden gemäß verschiedener Ausführungsbeispiele folgende Anwendungen auf Basis des Strukturbaums implementiert.

Beispielsweise kann die Anzeige des Strukturbaums zur Unterstützung des Nutzers bei der Navigation innerhalb der Nachricht verwendet werden. Damit lassen sich dann folgende Merkmale realisieren:
o Anzeige der Meldungsstruktur (Übersichtliche Strukturierung des Meldungsinhaltes)
o Navigation im Meldungstext
o Anzeige der Textposition im Baum
o Anzeige von Suchergebnissen im Baum

Gemäß einem weiteren Ausführungsbeispiel wird der Strukturbaum verwendet, um die Suche nach bestimmten Nachrichteninhalten zu verbessern.

Innerhalb der Nachricht ohne Baumstruktur kann beispielsweise nicht nach mehreren Suchkriterien gleichzeitig gesucht werden, die semantisch zusammengehören. Dies wird nun anhand eines Beispiels unter Bezugnahme auf Fig. 5 erläutert.

Fig. 5 zeigt verschiedene "Missionen" (MSSN), die an unterschiedlichen Tagen (DAY) stattfanden und unterschiedliche Ziele hatten, z. B. den Angriff auf ein Flugfeld (AIRFIELD) oder eine Raketenstellung (SAM). Wenn nun beispielsweise nach einer Mission gesucht wird, die einen Angriff auf ein Flugfeld darstellt und die in einen bestimmten Zeitraum fällt, so ist dies bei einer unstrukturierten Nachricht, die nicht in Baumstruktur vorliegt, nicht möglich, da diese Informationen in unterschiedlichen SETs enthalten sind und nicht SET-übergreifend gesucht werden kann. Ohne die Baumstruktur gäbe es keine Treffer, denn kein SET enthält sowohl die Informationen AIRFIELD wie auch DAY.

Dank der Baumstruktur kann jedoch SET-übergreifend, z. B. in einem Segment gesucht werden. Dabei werden die SETs gesucht, die die Suchkriterien erfüllen und in demselben Segment auftauchen. Der entsprechende übergeordnete Knoten des Segments bzw. das Eröffnungs-Set des Segments wird dann als Suchergebnis zurückgegeben.

Der Strukturbaum ermöglicht also die kombinierte Suche über SET-Grenzen hinweg.

Daneben können unter Verwendung des Strukturbaums, wenn bestimmte SETs beispielsweise extrahiert und/oder exportiert werden sollen, diese mit Metainformationen kombiniert werden, die aus der Struktur erhalten werden, z. B. aus übergeordneten, untergeordneten oder nebengeordneten SETS.

So können beispielsweise, wenn ein SET, das eine bestimmte Mission beschreibt, exportiert werden soll, die Missionsbeschreibung durch das SET kombiniert werden mit z. B. dem Export von Zeiten, Frequenzen und Koordinaten kombiniert mit evtl. weiteren Meta-Informationen, die anhand des Strukturbaum dem zu exportierendem Item (der Mission) zugeordnet werden.

Nachfolgend wird noch ein weiteres Ausführungsbeispiel des Struktur-Parsers beschrieben.

Die Erstellung eines Strukturbaums umfasst zunächst als Schritt i) die Zerlegung der Nachricht in Felder und Sets anhand der ersten und zweiten Trennzeichen innerhalb der Nachricht, um die einzelnen Felder und Sets der Nachricht zu erkennen. Die Felder und Sets sind dann der Ausgangspunkt für die weitere Verarbeitung.

Als nächstes folgt in einem Schritt ii) das Bilden von Segmenten, um inhaltlich zusammengehörende Sets zu identifizieren und einem Segment zusammenzufassen. Dies umfasst folgende Schritte:
Schritt iia) umfasst die Suche nach dem ersten sich wiederholenden Set der Set-Tiefe n, das die gleiche Set-ID aufweist wie ein vorangegangenes Set, wobei ein Set als sich wiederholendes Set angesehen wird, wenn es die gleiche Set-ID aufweist wie ein vorheriges Set und, wobei die Set-ID der Set-ID-Tiefe n eines Sets der Inhalt des ersten oder der ersten n Fields des Sets ist.

Dies bedeutet, dass nach dem ersten Set gesucht wird, das sich auf der obersten (noch nicht segmentierten) Hierarchieebene wiederholt. Dieses bildet das "Eröffnungsset" für die Segmente der obersten Segmentierungshierarchieebene. Schritt iib) umfasst, nach Auffinden eines sich wiederholenden Sets, das Durchsuchen der Nachricht nach weiteren Sets mit derselben Set-ID.

Dadurch wird dann nach Wiederholungen dieses "Eröffnungssets" gesucht, die dann weitere Segmente dieser (obersten) Segmentierungshierarchieebene eröffnen. Es wird angemerkt, das ein "sich wiederholendes Set" nicht völlig identisch sein muss mit einem vorher aufgetretenen Set, es muss vielmehr nur die gleiche Set-ID haben. Das heißt, dass bei sich wiederholenden Sets das n-te oder die ersten n Felder gleich sind.

Dann folgst Schritt iic), die Segmentierung der Nachricht in Segmente, wobei ein Segment gebildet wird durch das sich wiederholende Set mit der bestimmten Set-ID als Eröffnungsset des Segments und die ihm bis zum nächsten sich wiederholenden Set folgenden Sets als Unter-Sets.

Auf diese Weise werden die Grenzen der Segmente auf der obersten Hierarchieebene erkannt. Damit ist dann die oberste Segmenthierarchieebene "segmentiert".

In Schritt iid) folgt dann das wiederholte Anwenden der Schritte a) bis c) auf die noch nicht segmentierten Untersets der gebildeten Segmente, jeweils zur Bildung von Untersegmenten in einer nächst niedrigen Segmenthierarchiestufe, um dadurch eine hierarchische Struktur aus verschachtelten Segmenten zu bilden. Es wird also in den Untersets, die unterhalb der Eröffnungssets der zuletzt segmentierten Ebene liegen, nach dem ersten sich wiederholenden Set gesucht, das dann wiederum das Eröffnungsset der Segmente dieser Hierarchieebene darstellt.

Nach diesem Muster werden alle Hierarchieebenen von oben nach unten durchsegmentiert, bis keine weiteren sich wiederholenden Sets gefunden werden und somit eine weitere Segmentierung nicht möglich ist.

Auf diese Weise wird eine "Segment-Map erstellt, die den Beginn und das Ende der verschiedenen Segmente auf den unterschiedlichen Hierarchieebenen sowie die darin enthaltenen Sets angibt.

Auf dieser Basis kann dann der Strukturbaum basierend auf den gebildeten Segmenten in Schritt iii) erstellt werden.

Dies umfasst:
In Schritt iiia) das Zuweisen eines Knotens einer ersten Baumstruktur-Hierarchieebene zu jedem sich wiederholenden Set mit gleicher Set-ID einer bestimmten Segmenthierarchieebene.

Hier wird für eine Segmenthierarchieebene jedem sich wiederholenden Set dieser Ebene, also jedem Eröffnungsset eines Segments dieser Ebene, ein Knoten der Baumstruktur einer bestimmten Baumstruktur-Hierarchieebene zugeordnet. Sinnvollerweise wird dies in einem Ausführungsbeispiel zunächst für die oberste Segmenthierarchieebene durchgeführt.

Dann folgst Schritt iiib), das Gruppieren der in Schritt iiia) zugewiesenen Knoten der Baumstruktur unter einen gemeinsamen übergeordneten Knoten der nächst höheren Baumstruktur-Hierarchieebene.

Hier werden die sich wiederholenden Eröffnungssets unter einen gemeinsamen übergeordneten Baumknoten gruppiert. Dies fasst diese - aufgrund der Wiederholung semantisch zusammengehörenden - Eröffnungssets unter einem Knoten zusammen, was später die Navigation in der Baumstruktur erleichtert.

In Schritt iiic) folgt dann das Zuweisen von Unterknoten der nächst niedrigeren Baumstruktur- Hierarchieebene zu den Eröffnungssets Segmente der nächst niedrigeren Segmenthierarchieebene.

Hier wird also dann die Baumstruktur für die nächst niedrigere Segmentierungsebene zugeordnet. Die Eröffnungssegmente der nächst niedrigeren Segmenthierarchieebene werden also wieder Baumknoten zugeordnet, und zwar auf der nächst niedrigen Baumstruktur- Hierarchieebene.

In Schritt iiid) erfolgt dann das Gruppieren der in Schritt iiic) zugewiesenen Knoten der Baumstruktur unter einen gemeinsamen übergeordneten Knoten Baumstruktur-Hierarchieebene.

In Schritt iiie) erfolgt dann ein wiederholtes Anwenden der Schritte iiib) bis iiid) bis alle Eröffnungssets der hierarchischen Struktur aus verschachtelten Segmenten einem Baumknoten zugewiesen und unter einem übergeordneten Baumknoten gruppiert sind.

Auf diese Weise kann automatisch ein Strukturbaum erstellt werden, dessen Struktur dann die inhaltlich-semantische Struktur der Nachricht repräsentiert, ohne dass diese vorher bekannt war.

Es ist noch anzumerken, wie gemäß einem Ausführungsbeispiel die Sets, die auf einer Hierarchieebene weder Eröffnungssets (also sich wiederholende Sets) sind noch "Zwischen-Sets", also zwischen Eröffnungssets liegende Sets, behandelt werden. Es handelt sich dabei um diejenigen Sets, die dem letzten sich wiederholenden Eröffnungsset einer Hierarchieebene folgen und sich selbst nicht wiederholen. Gemäß einem Ausführungsbeispiel können diese einem Knoten zugewiesen, der auf der Hierarchieebene der entsprechenden Eröffnungssets liegt. Gemäß einem weiteren Ausführungsbeispiel kann auch geprüft werden, ob diese Sets bereits einmal bei einem vorhergehenden Eröffnungsset als "Unterset" aufgetreten sind. Für diejenigen Gruppe von Sets, die direkt auf das letzte Eröffnungsset folgen, erfolgt dann eine Einordnung als Untersets des letzten Eröffnungssets. Die weiteren folgenden Sets werden dann jedoch wie Eröffnungssets behandelt und einem entsprechenden Knoten zugewiesen.

Auf diese Weise können dann alle Sets der Nachricht entsprechenden Knoten der Baumstruktur zugewiesen werden.

Falls bei der Segmentierung zwar sich wiederholende Sets gefunden wurden, diese aber keine dazwischen liegenden Sets mit anderer SET-ID aufweisen, so ist eine Segmentierung nicht möglich bzw. es werden dann keine "Untersets" gefunden. Die weitere Segmentierung würde in einem solchen Fall abbrechen.

Dies könnte z. B. dann der Fall sein, wenn der Ersteller der Nachricht allen Sets jeweils ein gemeinsames Field vorangestellt hat. Dies führt dann zwar zu sich wiederholenden Sets, aber nicht zu einer Segmentierung.

Um diesen Fall zu behandeln wird gemäß einem Ausführungsbeispiel nach erfolgter Segmentierung mit einer anfänglichen Set-ID-Tiefe (z. B. eins) die SET-ID-Tiefe um eins erhöht. Dann wird nach Wiederholungen nicht des ersten Felds sondern des zweiten Feldes gesucht, das vorangestellte erste Feld wird also quasi "maskiert".

Der Struktur-Parser kann dann, nachdem auf der Set-ID-Tiefe eins lediglich eine Gruppierung erfolgt ist, auf Set-ID-Tiefe zwei nochmals ausgeführt werden und führt dann dort erfolgreich eine Segmentierung durch.

Entsprechend kann - abhängig von der Zahl der erforderlichen zu maskierenden vorangestellten Felder ― die Set-ID auch noch weiter erhöht werden. Eine Erhöhung der Set-ID-Tiefe ist allerdings nur solange erforderlich, bis dann erstmals eine Segmentierung möglich ist, d.h. bis zwischen den sich wiederholenden Sets auch tatsächlich Untersets auftreten, so dass Segmente gebildet werden können. Danach ist eine Erhöhung der Set-ID-Tiefe nicht mehr erforderlich.

## Patentansprüche

1. Computerimplementiertes Verfahren zur Erstellung eines Strukturbaums aus einer Nachricht, die zusammengesetzt ist aus einer Mehrzahl von Sets, wobei ein Set aus einem oder mehreren Feldern besteht, wobei die Felder jeweils inhaltlich nicht vorgegebene Textelementen enthalten, wobei die Grundstruktur der Nachricht definiert ist dadurch, dass ein Feld-Ende durch ein erstes vorgegebenes Trennzeichnen identifiziert wird, und dass ferner ein Set-Ende durch ein zweites vorgegebenes und vom ersten Trennzeichen verschiedenes Trennzeichnen identifiziert wird, wobei das Verfahren aufweist:
i) Zerlegung der Nachricht in Felder und Sets anhand der ersten und zweiten Trennzeichnen innerhalb der Nachricht, um die einzelnen Felder und Sets der Nachricht zu erkennen;
ii) Bilden von Segmenten, um inhaltlich zusammengehörende Sets zu identifizieren und einem Segment zusammenzufassen, durch:
iia) Suche nach dem ersten sich wiederholenden Set der Set-Tiefe n, das die gleiche Set-ID aufweist wie ein vorangegangenes Set, wobei ein Set als sich wiederholendes Set angesehen wird, wenn es die gleiche Set-ID aufweist wie ein vorheriges Set und, wobei die Set-ID der Set-ID-Tiefe n eines Sets der Inhalt des ersten oder der ersten n Fields des Sets ist;
iib) nach Auffinden eines sich wiederholenden Sets, Durchsuchen der Nachricht nach weiteren Sets mit derselben Set-ID;
iic) Segmentierung der Nachricht, in Segmente, wobei ein Segment gebildet wird durch das sich wiederholende Set mit der bestimmten Set-ID als Eröffnungs-Set und die ihm bis zum nächsten sich wiederholenden Set folgenden Sets als Unter-Sets,
iid) wiederholtes Anwenden der Schritte a) bis c) auf die noch nicht segmentierten Untersets der gebildeten Segmente, jeweils zur Bildung von Untersegmenten in einer nächst niedrigen Segmenthierarchiestufe, um dadurch eine hierarchische Struktur aus verschachtelten Segmenten zu bilden;
iii) Erstellen eines Strukturbaums basierend auf den gebildeten Segmenten, wobei die Erstellung des Strukturbaums aufweist:
iiia) Zuweisen eines Knotens einer ersten Baumstruktur-Hierarchieebene zu jedem sich wiederholenden Set mit gleicher Set-ID einer bestimmten Segmenthierarchieebene;
iiib) Gruppieren der in Schritt iiia) zugewiesenen Knoten der Baumstruktur unter einen gemeinsamen übergeordneten Knoten der nächst höheren Baumstruktur-Hierarchieebene;
iiic) Zuweisen von Unterknoten der nächst niedrigeren Baumstruktur-Hierarchieebene zu den Eröffnungssets der Segmente der nächst niedrigeren Segmenthierarchieebene;
iiid) Gruppieren der in Schritt iiic) zugewiesenen Knoten der Baumstruktur unter einen gemeinsamen übergeordneten Knoten der nächst höheren Baumstruktur-Hierarchieebene;
iiie) wiederholtes Anwenden der Schritte iiic) bis iiid) bis alle Sets der hierarchischen Struktur aus verschachtelten Segmenten einem Baumknoten zugewiesen sind.

2. Verfahren nach Anspruch 1,
wobei in Schritt iia) sowie dem entsprechenden für die niedrigeren Hierarchieebenen ausgeführten Schritt beim letzten sich nicht mehr wiederholenden Set die darauf folgenden Sets als zu diesem Segment gehörende Untersets angesehen wird, sofern sie bereits vorher in einem durch das Set mit der bestimmten Set-ID eröffneten Segment als Unterset aufgetaucht sind und bis einem Set, das noch nicht als Unterset aufgetaucht ist;

3. Verfahren nach Anspruch 1 oder 2, ferner aufweisend:
Erhöhen der Set-ID-Tiefe um eins und
Erneutes Ausführen der Schritte zum Bilden von Segmenten und zum Erstellen eines Strukturbaums basierend auf der um eins erhöhten SET-ID-Tiefe.

4. Verfahren nach Anspruch 3, wobei
Das Erhöhen der SET-ID-Tiefe um eins und das erneute Bilden von Segmenten und Erstellen eines Strukturbaums basierend auf der um eins erhöhten SET-ID-Tiefe wiederholt ausgeführt wird.

5. Verfahren nach einem der vorhergehenden Ansprüche, aufweisend:
Anzeigen der Nachricht in der erzeugten Baumstruktur und Ermöglichen der Navigation durch die Meldung anhand der Baumstruktur.

6. Verfahren nach einem der vorhergehenden Ansprüche aufweisend:
Verwenden des erzeugten Strukturbaums für die Suche nach Bestimmten Inhalten der Nachricht, aufweisend:
Ermöglichung der Eingabe von mehr als einem Suchkriterium, das in dem oder den zu suchenden Teil der Nachricht enthalten sein soll;
Suche nach Segmenten, deren inhalt das mehr als eine Suchkriterium erfüllt;
Ausgabe der Knoten, die den Eröffnungssets der Segmente zugeordnet sind, die das Suchkriterium erfüllen, als Antwort auf die Suche.

7. Vorrichtung zur Erstellung eines Strukturbaums aus einer Nachricht, die zusammengesetzt ist aus einer Mehrzahl von Sets, wobei ein Set aus einem oder mehreren Feldern besteht, wobei die Felder jeweils inhaltlich nicht vorgegebene Textelementen enthalten, wobei die Grundstruktur der Nachricht definiert ist dadurch, dass ein Feld-Ende durch ein erstes vorgegebenes Trennzeichnen identifiziert wird, und dass ferner ein Set-Ende durch ein zweites vorgegebenes und vom ersten Trennzeichen verschiedenes Trennzeichnen identifiziert wird, wobei die Vorrichtung aufweist:
i) ein Modul zur Zerlegung der Nachricht in Felder und Sets anhand der ersten und zweiten Trennzeichen innerhalb der Nachricht, um die einzelnen Felder und Sets der Nachricht zu erkennen;
ii) ein Modul zum Bilden von Segmenten, um inhaltlich zusammengehörende Sets zu identifizieren und einem Segment zusammenzufassen, durch:
iia) ein Modul zur Suche nach dem ersten sich wiederholenden Set der Set-Tiefe n, das die gleiche Set-ID aufweist wie ein vorangegangenes Set, wobei ein Set als sich wiederholendes Set angesehen wird, wenn es die gleiche Set-ID aufweist wie ein vorheriges Set und, wobei die Set-ID der Set-ID-Tiefe n eines Sets der Inhalt des ersten oder der ersten n Fields des Sets ist;
iib) ein Modul zum, nach Auffinden eines sich wiederholenden Sets, Durchsuchen der Nachricht nach weiteren Sets mit derselben Set-ID;
iic) ein Modul zur Segmentierung der Nachricht in Segmente, wobei ein Segment gebildet wird durch das sich wiederholende Set mit der bestimmten Set-ID als Eröffnungs-Set und die ihm bis zum nächsten sich wiederholenden Set folgenden Sets als Unter-Sets,
iid) ein Modul zum wiederholten Anwenden der Schritte a) bis c) auf die noch nicht segmentierten Untersets der gebildeten Segmente, jeweils zur Bildung von Untersegmenten in einer nächst niedrigen Segmenthierarchiestufe, um dadurch eine hierarchische Struktur aus verschachtelten Segmenten zu bilden;
iii) ein Modul zum Erstellen eines Strukturbaums basierend auf den gebildeten Segmenten, wobei die Erstellung des Strukturbaums aufweist:
iiia) Zuweisen eines Knotens einer ersten Baumstruktur-Hierarchieebene zu jedem sich wiederholenden Set mit gleicher Set-ID einer bestimmten Segmenthierarchieebene;
iiib) Gruppieren der in Schritt iiia) zugewiesenen Knoten der Baumstruktur unter einen gemeinsamen übergeordneten Knoten der nächst höheren Baumstruktur-Hierarchieebene:
iiic) Zuweisen von Unterknoten der nächst niedrigeren Baumstruktur-Hierarchieebene zu den Eröffnungssets der Segmente der nächst niedrigeren Segmenthierarchieebene;
iiid) Gruppieren der in Schritt iiic) zugewiesenen Knoten der Baumstruktur unter einen gemeinsamen übergeordneten Knoten der nächst höheren Baumstruktur-Hierarchieebene;
iiie) wiederholtes Anwenden der Schritte iiic) bis iiid) bis alle Sets der hierarchischen Struktur aus verschachlelten Segmenten einem Baumknoten zugewiesen sind.

8. Vorrichtung nach Anspruch 7, ferner aufweisend
Ein Modul zur Durchführung eines Verfahrens nach einem der Ansprüche 2 bis 6.

9. Computerprogramm, aufweisend Computerprogrammcode, der, wenn er von einem Computer ausgeführt wird, diesen in die Lage versetzt, ein Verfahren gemäß einem der Ansprüche 1 bis 6 auszuführen.

## Claims

1. Computer-implemented method for generating a structure tree from a message which is composed of a plurality of sets, a set being comprised by one or more fields, the fields respectively including non-predefined textural elements, where the basic structure of the message is defined by a field and being identified by a first prescribed delimiter and furthermore by a set end being identified by a second prescribed delimiter which is different from the first delimiter, the method comprising:
i) decomposing the message in fields and sets based on the first and second delimiters within the message in order to recognize the individual fields and sets of the message;
ii) forming segments to identify sets which with respect to their content belong together and to merge them into a segment, by
iia) searching for the first repeating set of the set depth n which has the same set ID as a preceding set, where a set is considered to be a repeating set if it has the same set ID as a preceding set and where the set ID of the set ID-depth n of a set is the content of the first field or the first n fields of the set;
iib) after having found a repeating set, searching the message for further sets with the same set ID;
iic) segmenting the message into segments, where a segment is formed by the repeating set with the determined set ID as opening set and those sets as sub-sets which follow the set until the next repeating set,
iid) repeatedly applying the steps a) to c) to the not yet segmented sub-sets of the formed segments for respectively forming sub-segments in a next lower segment hierarchy level to thereby form a hierarchical structure of nested segments;
iii) forming a structure tree based on the formed segments, where the forming of the structure tree comprises:
iiia) assigning a node of a first tree structure hierarchy level to each repeating set with the same set ID of a certain segment hierarchy level;
iiib) grouping of the nodes of the tree structure which have been assigned in step iiia) under a common higher node of the next higher tree structure hierarchy level;
iiic) assigning of sub-nodes of the next lower tree structure hierarchy level to the opening sets of the segments of the next lower segment hierarchy level;
iiid) grouping of the nodes of the tree structure which have been assigned in step iiic) under a common higher node of the next higher tree structure hierarchy level;
iiie) repeatedly applying the steps iiic) to iiid) until all sets of the hierarchical structure of nested segments are assigned to a tree structure.

2. The method of claim 1,
wherein in step iia) as well as in the corresponding step which is executed for the lower hierarchy levels ..... none-repeating set those sets which follow it are considered to be sub-sets belonging to this segment, if they have already before appeared as sub-set in a segment which is opened by the set with the determined set-ID, and up to a set which has not yet appeared as a sub-set.

3. The method of claim 1 or 2, further comprising:
increasing the set-ID-depth by 1, and
repeated execution of the steps for forming segments and for generating a structure tree based on the set-ID-depth which has been increased by 1.

4. The method of claim 3, wherein
the increase of the set-ID-depth by 1 and the repeated formation of segments and the formation of a structure tree based on a set-ID-depth increased by 1 is repeatedly executed.

5. The method of one of the preceding claims, comprising:
displaying the message in the created tree structure and enabling the navigation through the message based on the tree structure.

6. The method according to one of the preceding claims, comprising:
using the created structure tree for the search for certain contents of the message, comprising:
enabling the input of more than one search criterion which should be included in the part of the message to be searched;
searching for segments the content of which fulfils the more than one search criterion;
outputting the nodes which are assigned to the opening sets of the segments which fulfil the search criterion as a response to the search.

7. Apparatus for creating a structure tree from a message which is composed of a plurality of sets, a set being comprised by one or more fields, the fields respectively including non-predefined textural elements, where the basic structure of the message is defined by a field and being identified by a first prescribed delimiter and furthermore by a set end being identified by a second prescribed delimiter which is different from the first delimiter, the method comprising:
i) a module for decomposing the message in fields and sets based on the first and second delimiters within the message in order to recognize the individual fields and sets of the message;
ii) a module for forming segments to identify sets which with respect to their content belong together and to merge them into a segment, by
iia) a module for searching for the first repeating set of the set depth n which has the same set ID as a preceding set, where a set is considered to be a repeating set if it has the same set ID as a preceding set and where the set ID of the set ID-depth n of a set is the content of the first field or the first n fields of the set;
iib) a module for after having found a repeating set, searching the message for further sets with the same set ID,
iic) a module for segmenting the message into segments, where a segment is formed by the repeating set with the determined set ID as opening set and those sets as sub-sets which follow the set until the next repeating set,
iid) a module for repeatedly applying the steps a) to c) to the not yet segmented sub-sets of the formed segments for respectively forming sub-segments in a next lower segment hierarchy level to thereby form a hierarchical structure of nested segments;
iii) a module for forming a structure tree based on the formed segments, where the forming of the structure tree comprises:
iiia) a module for assigning a node of a first tree structure hierarchy level to each repeating set with the same set ID of a certain segment hierarchy level;
iiib) a module for grouping of the nodes of the tree structure which have been assigned in step iiia) under a common higher node of the next higher tree structure hierarchy level;
iiic) a module for assigning of sub-nodes of the next lower tree structure hierarchy level to the opening sets of the segments of the next lower segment hierarchy level;
iiid) a module for grouping of the nodes of the tree structure which have been assigned in step iiic) under a common higher node of the next higher tree structure hierarchy level;
iiie) a module for repeatedly applying the steps iiic) to iiid) until all sets of the hierarchical structure of nested segments are assigned to a tree structure.

8. The apparatus of claim 7, further comprising:
a module for executing a method according to one of the steps 2 to 6.

9. Computer program comprising computer program code which, when being executed by a computer, enables it to execute a method according to one of steps 1 to 6.

## Revendications

1. Procédé mis en oeuvre sur ordinateur pour l'établissement d'une arborescence à partir d'un message qui est composé d'une pluralité d'ensembles, un ensemble se composant d' un ou de plusieurs champs, les champs contenant respectivement, au niveau du contenu, des éléments textuels non fixés à l'avance, la structure de base du message étant définie du fait qu'une fin de champ est identifiée par un premier signe séparateur fixé à l'avance et du fait que, en outre, une fin d'ensemble est identifiée par un deuxième signe séparateur fixé à l'avance et différent du premier signe séparateur, le procédé présentant :
i) La décomposition du message en champs et ensembles à l'aide des premier et deuxième signes séparateurs à l'intérieur du message afin de reconnaître les différents champs et ensembles du message ;
ii) la formation de segments afin d'identifier des ensembles qui vont ensemble au plan du contenu et de les rassembler en un segment, par :
iia) la recherche du premier ensemble itératif de profondeur d'ensemble n qui présente le même ID d'ensemble qu'un ensemble précédent, un ensemble étant considéré comme un ensemble itératif quand il présente le même ID d'ensemble qu'un ensemble antérieur, et l'ID d'ensemble de profondeur d'ensemble n d'un ensemble étant le contenu du premier ou des premiers n fields de l'ensemble ;
iib) après avoir trouvé un ensemble itératif, exploration du message pour trouver d'autres ensembles ayant le même ID d'ensemble ;
iic) la segmentation du message en segments, un segment étant formé par l' ensemble itératif ayant l'ID d'ensemble défini, en tant qu'ensemble d'ouverture, et par les ensembles qui le suivent jusqu'au prochain ensemble itératif, en tant que sous-ensembles,
iid) l'application itérative des étapes a) à c) aux sous-ensembles non encore segmentés des segments formés, respectivement pour la formation de sous-segments dans un niveau hiérarchique de segments immédiatement plus bas pour former de ce fait une structure hiérarchique composée de segments imbriqués ;
iii) l'établissement d'une arborescence basée sur les segments formés, l'établissement de l'arborescence présentant :
iiia) l'affectation d'un noeud d'un premier plan hiérarchique d'arborescence à chaque ensemble itératif ayant le même ID d'ensemble d'un plan hiérarchique de segments défini ;
iiib) le regroupement des noeuds de l'arborescence affectés dans l'étape iiia) sous un noeud supérieur commun du plan hiérarchique d'arborescence immédiatement plus élevé;
iiic) l'affectation de sous-noeuds du plan hiérarchique d'arborescence immédiatement plus bas aux ensembles d'ouverture des segments du plan hiérarchique de segments immédiatement plus bas ;
iiid) le regroupement des noeuds de l'arborescence affectés dans l'étape iiic) sous un noeud supérieur commun du plan hiérarchique d'arborescence immédiatement plus élevé ;
iiie) l'application itérative des étapes iiic) à iiid) jusqu'à ce que tous les ensembles de la structure hiérarchique composée de segments imbriqués soient affectés à un noeud de l'arborescence.

2. Procédé selon la revendication 1,
dans lequel, dans l'étape iia) ainsi que dans l'étape correspondante exécutée pour les plans hiérarchiques plus bas dans le dernier ensemble qui ne se répète plus, les ensembles qui suivent sont considérés comme des sous-ensembles appartenant à ce segment dans la mesure où ils sont déjà apparus préalablement en tant que sous-ensemble dans un segment ouvert par l'ensemble ayant l'ID d'ensemble défini, et jusqu'à un ensemble qui n'est pas encore apparu en tant que sous-ensemble ;

3. Procédé selon la revendication 1 ou 2, présentant également :
l'augmentation, d'une unité, de la profondeur d'ID d'ensemble et
la nouvelle exécution des étapes pour la formation de segments et pour l'établissement d'une arborescence basée sur la profondeur d'ID d'ensemble augmentée d'une unité.

4. Procédé selon la revendication 3,
l'augmentation, d'une unité, de la profondeur d'ID d'ensemble et la nouvelle formation de segments et l'établissement d'une arborescence basée sur la profondeur d'ID d'ensemble augmentée d'une unité sont exécutés de façon répétée.

5. Procédé selon une des revendications précédentes, présentant :
l'affichage du message dans l'arborescence produite et la création d'une possibilité de navigation à travers l'information à l'aide de l'arborescence.

6. Procédé selon une des revendications précédentes, présentant :
l'utilisation de l'arborescence produite pour la recherche de contenus définis du message, présentant
la création d'une possibilité d'entrer plus d'un critère de recherche qui doit être contenu dans la partie du message à rechercher ;
la recherche de segments dont le contenu respecte le critère de recherche dont le nombre est supérieur à un ;
la production, en tant que réponse à la recherche, des noeuds qui sont affectés aux ensembles d'ouverture des segments et qui respectent le critère de recherche.

7. Dispositif d'établissement d'une arborescence à partir d'un message qui est composé d'une pluralité d'ensembles, un ensemble se composant d'un ou de plusieurs champs, les champs contenant respectivement, au niveau du contenu, des éléments textuels non fixés à l'avance, la structure de base du message étant définie du fait qu'une fin de champ est identifiée par un premier signe séparateur fixé à l'avance et du fait que, en outre, une fin d'ensemble est identifiée par un deuxième signe séparateur fixé à l'avance et différent du premier signe séparateur, le dispositif présentant :
i) un module pour la décomposition du message en champs et ensemble à l'aide des premier et deuxième signes séparateurs à l'intérieur du message afin de reconnaître les différents champs et ensembles du message ;
ii) un module pour la formation de segments afin d'identifier des ensembles qui vont ensemble au plan du contenu et de les rassembler en un segment, par :
iia) un module pour la recherche du premier ensemble itératif de profondeur d'ensemble n qui présente le même ID d'ensemble qu'un ensemble précédent, un ensemble étant considéré comme un ensemble itératif quand il présente le même ID d'ensemble qu'un ensemble antérieur, l'ID d'ensemble de profondeur d'ensemble n d'un ensemble étant le contenu du premier ou des premiers n fields de l'ensemble ;
iib) un module pour, après avoir trouvé un ensemble itératif, explorer le message pour trouver d'autres ensembles ayant le même ID d'ensemble ;
iic) un module pour la segmentation du message en segments, un segment étant formé par l'ensemble itératif ayant l'ID d'ensemble défini, en tant qu'ensemble d'ouverture, et par les ensembles qui le suivent jusqu'au prochain ensemble itératif, en tant que sous-ensembles ;
iid) un module pour l'application itérative des étapes a) à c) aux sous-ensembles non encore segmentés des segments formés, respectivement pour la formation de sous-segments dans un niveau hiérarchique de segments immédiatement plus bas pour former de ce fait une structure hiérarchique composée de segments imbriqués ;
iii) un module pour l'établissement d'une arborescence basée sur les segments formés, l'établissement de l'arborescence présentant :
iiia) l'affectation d'un noeud d'un premier plan hiérarchique d'arborescence à chaque ensemble itératif ayant le même ID d'ensemble d'un plan hiérarchique de segments défini;
iiib) le regroupement des noeuds de l'arborescence affectés dans l'étape iiia) sous un noeud supérieur commun du plan hiérarchique d'arborescence immédiatement plus élevé;
iiic) l'affectation de sous-noeuds du plan hiérarchique d'arborescence immédiatement plus bas aux ensembles d'ouverture des segments du plan hiérarchique de segments immédiatement plus bas ;
iiid) le regroupement des noeuds de l'arborescence affectés dans l'étape iiic) sous un noeud supérieur commun du plan hiérarchique d'arborescence immédiatement plus élevé ;
iiie) l'application itérative des étapes iiic) à iiid) jusqu'à ce que tous les ensembles de la structure hiérarchique composée de segments imbriqués soient affectés à un noeud de l'arborescence.

8. Dispositif selon la revendication 7, présentant également
un module pour la réalisation d'un procédé selon une des étapes 2 à 6.

9. Programme d'ordinateur, présentant un code de programme d'ordinateur qui, quand il est exécuté par un ordinateur, met cet ordinateur en mesure d'exécuter un procédé selon une des étapes 1 à 6.
